(19) Europäisches Patentamt
European Patent Office
Office européen des brevets

(11) **EP 3 782 521 B1**

(12) **EUROPEAN PATENT SPECIFICATION**

(45) Date of publication and mention
of the grant of the patent:
**12.07.2023 Bulletin 2023/28**

(21) Application number: **20190523.9**

(22) Date of filing: **11.08.2020**

(51) International Patent Classification (IPC):
***A47J 43/042*** *(2006.01)*      ***A47J 31/60*** *(2006.01)*

(52) Cooperative Patent Classification (CPC):
**A47J 43/042;** A47J 31/60

(54) **METHOD AND STORAGE MEDIUM FOR DRYING FOOD PROCESSOR, AND FOOD PROCESSOR**

VERFAHREN UND SPEICHERMEDIUM ZUM TROCKNEN EINER
LEBENSMITTELVERARBEITUNGSMASCHINE UND
LEBENSMITTELVERARBEITUNGSMASCHINE

PROCÉDÉ ET SUPPORT DE STOCKAGE POUR LE SÉCHAGE D'UN ROBOT DE CUISINE ET
ROBOT DE CUISINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.08.2019 CN 201910778355**

(43) Date of publication of application:
**24.02.2021 Bulletin 2021/08**

(73) Proprietor: **BSH Hausgeräte GmbH
81739 München (DE)**

(72) Inventors:
• **Lu, Peng
Nanjing, 210046 (CN)**
• **Wang, Dong
Nanjing, 210000 (CN)**
• **Yuan, Chao
Nanjing, 210046 (CN)**

(56) References cited:
**EP-A1- 3 335 600      WO-A1-2016/134255
WO-A1-2019/123472      CN-A- 107 080 461**

## Description

## BACKGROUND

## Technical Field

The present invention relates to the field of household appliances, and in particular, to a method and storage medium for drying a food processor, and a corresponding food processor.

## Related Art

Currently, there is usually some water left in a food processor such as a high-speed heating blender after cleaning, which is not easy to dry and leads to the breeding of bacteria and unpleasant odors.

In addition, if the food processor frequently enters the overheating protection state due to improper use, its service life may be adversely affected.

Prior Art

WO2019123472A1 discloses a compact robotic food making apparatus that can automatically record culinary dish cooking process as digital recipe and repeat cooking same culinary dish using the digital recorded recipe. The ingredients are loaded into canisters, which are mounted next to heating apparatus. The apparatus includes memory card for storing one or more digital recipe. The operations like dispensing liquids, heating the cooking utensil or stirring the contents of the cooking utensil are performed automatically under the control of one or more processor module which is connected to network wirelessly. The apparatus comprises a heating element and a temperature sensor. However, the apparatus isn't capable of processing food as it doesn't comprise any blade. Furthermore, the patent application is silent on drying the apparatus by means of rotating the blade.

## SUMMARY

An objective of the present invention is to solve, at least one of the problems described above.

To achieve the above objective, an aspect of the embodiments of the present invention provides a method for drying a food processor. The food processor includes a heater and a blade. The method includes steps of: reading a temperature $T_1$ of the heater of the food processor; heating the heater for a heating time $t_1$, the heating time $t_1$ being calculated according to the temperature $T_1$ and a preset temperature $T_a$, and the preset temperature $T_a$ being lower than an overheating protection temperature $T_m$ of the heater; and rotating the blade of the food processor for air drying. In this way, intelligent hot air drying and sterilization can be implemented for the food processor that has water left therein after cleaning, and the food processor can be prevented from frequently entering the overheating protection state.

Optionally, in the rotation step, when a rotation time $t_2$ is reached, a temperature $T_2$ of the heater is read, $t_2 < t_3$, and $t_3$ can be set according to an empirical time value of air drying; and the method includes steps of: when $T_a - T_2 < T_b$, continuing to rotate the blade, and ending the drying after a time $t_3 - t_2$, $T_b$ being a preset temperature difference and $T_b \geq T_m - T_a$; and when $T_a - T_2 \geq T_b$, heating the heater, and after a heating time $t_4$, rotating the blade for air drying, $t_4$ being calculated according to the preset temperature $T_a$ and $T_2$. In this way, monitoring and timely adjustment can be implemented in the air drying process, thereby improving the drying effect.

Optionally, the step includes: when $t_3 - t_2 \geq t_a$, $t_a$ being a preset time difference, ending the drying after an air drying time $t_3 - t_2$, and when $t_3 - t_2 < t_a$, ending the drying after an air drying time $t_a$. In this way, intelligent hot air drying and sterilization can be implemented for the food processor that has water left therein after cleaning.

Optionally, the preset time difference $t_a$ is between 10 seconds and 20 seconds. In this way, the drying effect can be controlled intelligently.

Optionally, $t_3$ is between 50 seconds and 180 seconds. In this way, an ideal drying time can be determined depending on different products.

Optionally, $T_b \geq 10°C$. In this way, the heating and air drying operations can be determined according to the temperature difference.

Optionally, the heating time $t_4$ is calculated ac-

$$t_4 = \frac{C \cdot m \cdot (T_a - T_2)}{U \cdot I}$$

cording to the following formula:
, where C is a specific heat capacity of the heater, m is a mass of the heater, U is a voltage used for heating, and I is a current used for heating. In this way, it may be helpful to prevent the food processor from frequently entering the state of overheating protection.

Optionally, the heating time $t_1$ is calculated ac-

$$t_1 = \frac{C \cdot m \cdot (T_a - T_1)}{U \cdot I}$$

cording to the following formula:
, where C is a specific heat capacity of the heater, m is a mass of the heater, U is a voltage used for heating, and I is a current used for heating. In this way, the food processor can be prevented from frequently entering the overheating protection state.

Optionally, $T_m - T_a$ is in a range of 5°C to 10°C. In this way, the food processor can be prevented from frequently entering the overheating protection state.

Optionally, the method includes: opening a feeding port of the food processor. In this way, water vapor can be discharged during heating or during rotation of the blade.

Another aspect of the embodiments of the present invention provides a food processor, comprising a heater, a blade, a temperature sensor and a control board. The control board stores an executable computer instruction. When the control board runs the computer instruction, the method described above is performed.

Still another aspect of the embodiments of the present invention provides a storage medium. The storage medium stores a computer instruction. When the computer instruction is run, the method described above is performed.

The present invention will be further described below with reference to the accompanying drawings. Same or similar labels are used in the accompanying drawings to denote same or similar elements in different embodiments, and the descriptions of the same or similar elements may be omitted in different embodiments.

## BRIEF DESCRIPTION OF THE DRAWINGS

FIG. 1 is a sectional cross-sectional view of a food processor according to an embodiment of the present invention;

FIG. 2 is a schematic flowchart of a method for drying the food processor in FIG. 1 according to an embodiment of the present invention; and

FIG. 3 is a main view of the food processor in FIG 1.

## DETAILED DESCRIPTION

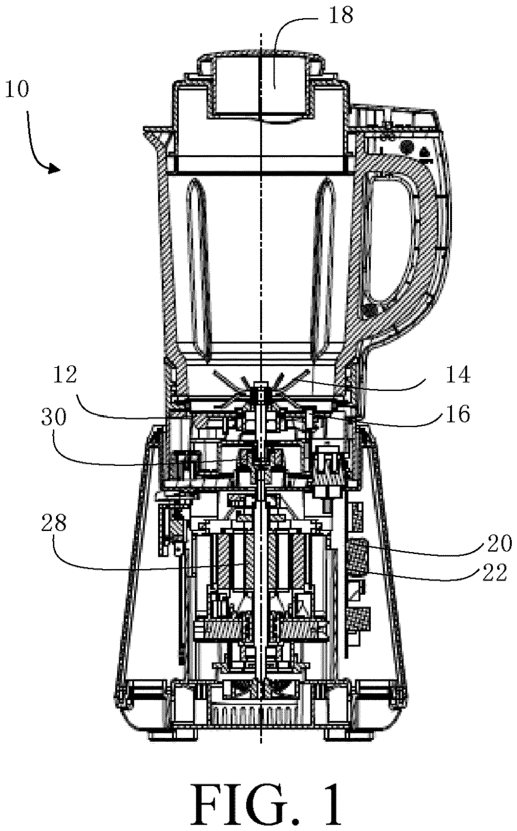

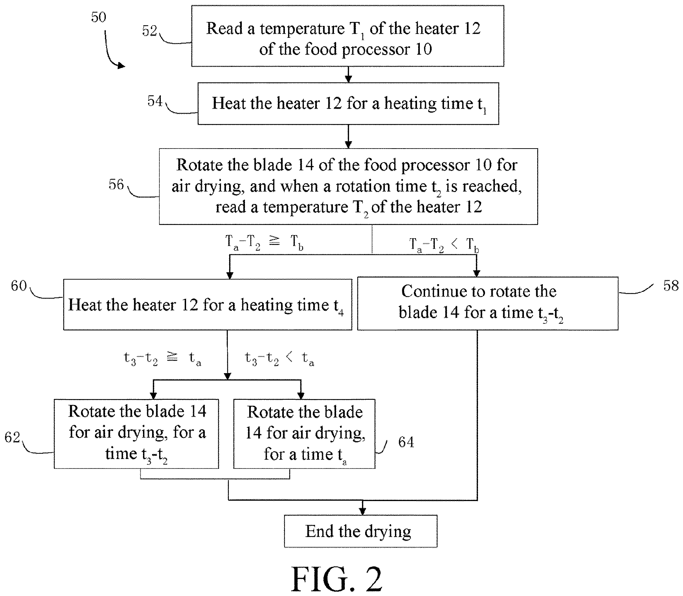

As shown in FIG. 1 and FIG. 2, an aspect of the embodiments of the present invention provides a method 50 for drying a food processor 10. The food processor 10 includes a heater 12 and a blade 14.

The food processor 10 may be a high-speed heating blender or other food processing appliances including a heater and a blade.

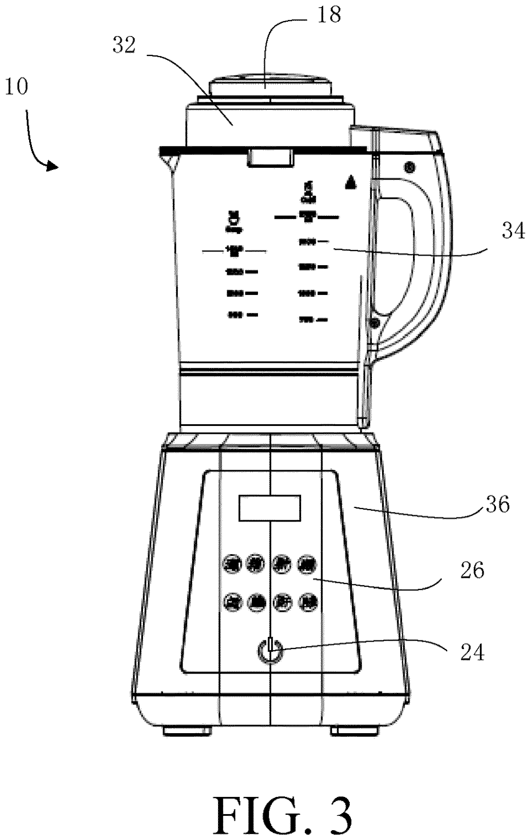

Referring to FIG. 1 and FIG. 3, the food processor 10 may include a lid 32, a body 34 and a base 36. The lid 32 includes a feeding port 18. The body 34 usually has water left therein after cleaning and needs to be dried.

The heater 12 and the blade 14 may be located in the base 36. The heater 12 may be a heating plate or other elements capable of heating food. The heater 12 may be provided with a temperature sensor 16. The blade 14 may be of any shape and structure that can cut food.

The base 36 may be provided with a control panel 26. The control panel 26 may include a power button 24, an automatic drying key (not labeled) and so on.

The base 36 may further include a motor 28, which can drive, through a coupling 30, the blade 14 to rotate.

Optionally, the method 50 includes: opening the feeding port 18 of the food processor 10. In this way, water vapor can be discharged during heating or during rotation of the blade. Referring to FIG. 3, for example, the power button 24 is pressed to power on the food processor 1110, the feeding port 18 is opened, and the automatic drying key (not labeled) is pressed to start drying.

The method 50 includes steps of: 52, reading a temperature $T_1$ of the heater 12 of the food processor 10; 54, heating the heater 12 for a heating time $t_1$, the heating time $t_1$ being calculated according to the temperature T, and a preset temperature $T_a$, and the preset temperature $T_a$ being lower than an overheating protection temperature $T_m$ of the heater 12; and 56, rotating the blade 14 of the food processor 10 for air drying. In this way, intelligent hot air drying and sterilization can be implemented for the food processor 10 that has water left therein after cleaning, and the food processor 10 can be prevented from frequently entering the overheating protection state.

The temperature sensor 16 may be configured to read the temperature T, of the heater 12.

The heating time $t_1$ may be calculated according to the following formula:

$$t_1 = \frac{C \cdot m \cdot (T_a - T_1)}{U \cdot I},$$

where C is a specific heat capacity of the heater, m is a mass of the heater, $T_a$ is the preset temperature lower than the overheating protection temperature $T_m$ of the heater 12, $T_a$-$T_1$ is the difference between the preset temperature $T_a$ and the read temperature $T_1$, U is a voltage used for heating, and I is a current used for heating. In this way, the food processor can be prevented from frequently entering the overheating protection state.

The difference $T_m$-$T_a$ between the overheating protection temperature $T_m$ and the preset temperature $T_a$ may be in a range of 5°C to 10°C. In this way, the food processor can be prevented from frequently entering the overheating protection state.

After the heating time $t_1$, the rotation of the blade 14 may be driven by the motor 28 through the coupling 30, at a variable speed or constant speed, and in a forward or reverse direction.

In some embodiments, in the step 56, when a rotation time $t_2$ is reached, a temperature $T_2$ of the heater 12 is read, $t_2$<$t_3$, and $t_3$ can be set according to an empirical time value of air drying; and the method includes steps of: 58, when $T_a$-$T_2$<$T_b$, continuing to rotate the blade 14, and ending the drying after a time $t_3$-$t_2$, $T_b$ being a preset temperature difference and $T_b$≥$T_m$-$T_a$; and 60, when $T_a$-$T_2$≥$T_b$, heating the heater 12, and after a heating time $t_4$, rotating the blade 14 for air drying, $t_4$ being calculated according to the preset temperature $T_a$ and $T_2$. $T_a$-$T_2$ is the difference between the preset temperature $T_a$ and the read temperature $T_2$. $t_3$-$t_2$ is the difference between $t_2$ and $t_2$. In this way, monitoring and timely adjustment can be implemented in the air drying process, thereby improving the drying effect. The temperature $T_2$ may also be read by the temperature sensor 16.

$t_3$, which is determined according to the experience of air drying, may be between 50 seconds and 180 seconds. In this way, an ideal drying time can be determined depending on different products.

Optionally, $T_b \geq 10°C$. In this way, the heating and air drying operations can be determined through comparison of the temperature difference $T_a$-$T_2$ between the preset temperature and the read temperature with the preset temperature difference $T_b$.

Optionally, the heating time $t_4$ may be calculated according to the following formula:

$$t_4 = \frac{C \cdot m \cdot (T_a - T_2)}{U \cdot I},$$

where C is a specific heat capacity of the heater, m is a mass of the heater, $T_a$-$T_1$ is the difference between the preset temperature $T_a$ and the read temperature $T_1$, U is a voltage used for heating, and I is a current used for heating. In this way, the food processor can be prevented from frequently entering the overheating protection state.

During the heating time $t_4$, the rotation of the blade 14 may be stopped to reduce the electricity consumption and conserve energy.

In some embodiments, the step 60 includes: 62, when $t_3$-$t_2 \geq t_a$, $t_a$ being a preset time difference, ending the drying after an air drying time $t_3$-$t_2$, and 64, when $t_3$-$t_2 < t_a$, ending the drying after an air drying time $t_a$. $t_3$-$t_2$ is the difference between $t_3$ and $t_2$. In this way, intelligent hot air drying and sterilization can be implemented for the food processor that has water left therein after cleaning.

Optionally, the preset time difference $t_a$ is between 10 seconds and 20 seconds. In this way, the drying effect can be controlled intelligently.

Another aspect of the present invention provides a food processor 1, comprising a heater, a blade, a temperature sensor and a control board 20. The control board 20 stores an executable computer instruction. When the control board 20 runs the computer instruction, the method described above is performed. The control board 20 may be located in the base 36.

Still another aspect of the present invention provides a storage medium 22. The storage medium stores an executable computer instruction. When the computer instruction is run, the method described above is performed. The storage medium may include a read-only memory (ROM), a random access memory (RAM), a magnetic disk or an optical disc, and so on. The storage medium may also include a nonvolatile memory or a nontransitory memory. The storage medium 22 may be located in the control board 20.

Based on the above, the embodiments of the present invention can implement intelligent hot air drying and sterilization for the food processor that has water left therein after cleaning, and prevent the food processor from frequently entering the overheating protection state.

The foregoing descriptions and the various embodiments shown in the accompanying drawings are merely used for illustrating rather than limiting the present invention.

## Claims

1. A method (50) for drying a food processor (10), the food processor (10) comprising a heater (12) and a blade (14), **characterized in that,** the method comprises steps of:

   (52) reading a temperature $T_1$ of the heater (12) of the food processor (10);
   (54) heating the heater (12) for a heating time $t_1$, the heating time $t_1$ being calculated according to the temperature $T_1$ and a preset temperature $T_a$, and the preset temperature $T_a$ being lower than an overheating protection temperature $T_m$ of the heater (12); and (56) rotating the blade (14) of the food processor (10) for air drying.

2. The method (50) according to claim 1, **characterized in that,** in the step (56), when a rotation time $t_2$ is reached, a temperature $T_2$ of the heater (12) is read, $t_2 < t_3$, and $t_3$ is set according to an empirical time value of air drying; and the method comprises steps of:

   (58) when $T_a$-$T_2 < T_b$, continuing to rotate the blade (14), and ending the drying after a time $t_3$-$t_2$, $T_b$ being a preset temperature difference and $T_b \geq T_m$-$T_a$; and
   (60) when $T_a$-$T_2 \geq T_b$, heating the heater (12), and after a heating time $t_4$, rotating the blade (14) for air drying, $t_4$ being calculated according to the preset temperatures $T_a$ and $T_2$.

3. The method (50) according to claim 2, **characterized in that,** the step (60) comprises:

   (62) when $t_3$-$t_2 \geq t_a$, $t_a$ being a preset time difference, ending the drying time after an air drying time $t_3$-$t_2$; and
   (64) when $t_3$-$t_2 < t_a$, ending the drying after an air drying time $t_a$.

4. The method (50) according to claim 3, **characterized in that,** the preset time difference $t_a$ is between 10 seconds and 20 seconds.

5. The method (50) according to claim 2, **characterized in that,** $t_3$ is between 50 seconds and 180 seconds.

6. The method (50) according to claim 2, **characterized in that,** $T_b \geq 10°C$.

7. The method (50) according to claim 2, **character-**

**ized in that,** the heating time $t_4$ is calculated according to the following formula:

$$t_4 = \frac{C \cdot m \cdot (T_a - T_2)}{U \cdot I},$$

wherein C is a specific heat capacity of the heater, m is a mass of the heater, U is a heating voltage, and I is a heating current.

8. The method (50) according to claim 1, **characterized in that,** the heating time $t_1$ is calculated according to the following formula:

$$t_1 = \frac{C \cdot m \cdot (T_a - T_1)}{U \cdot I},$$

wherein C is a specific heat capacity of the heater, m is a mass of the heater, U is a heating voltage, and I is a heating current.

9. The method (50) according to claim 1, **characterized in that,** $T_m - T_a$ is in a range of 5°C to 10°C.

10. The method (50) according to claim 1, **characterized by** comprising: opening a feeding port (18) of the food processor (10).

11. A food processor (10), comprising a heater (12), a blade (14), a temperature sensor (16) and a control board (20), the control board (20) storing an executable computer instruction, **characterized in that,** the method according to any one of claims 1 to 10 is performed when the control board (20) runs the computer instruction.

12. A storage medium (22), the storage medium storing an computer instruction, **characterized in that,** the method according to any one of claims 1 to 10 is performed when the computer instruction is run on the food processor according to claim 11.

**Patentansprüche**

1. Verfahren (50) zum Trocknen einer Küchenmaschine (10), wobei die Küchenmaschine (10) eine Heizvorrichtung (12) und ein Messer (14) umfasst, **dadurch gekennzeichnet, dass** das Verfahren folgende Schritte umfasst:

(52) Ablesen einer Temperatur $T_1$ der Heizvorrichtung (12) der Küchenmaschine (10),
(54) Heizen der Heizvorrichtung (12) für eine Heizdauer $t_1$, wobei die Heizdauer $t_1$ der Temperatur $T_1$ und einer voreingestellten Temperatur $T_a$ entsprechend berechnet wird und die vor-

eingestellte Temperatur $T_a$ geringer ist als eine Überhitzungsschutztemperatur $T_m$ der Heizvorrichtung (12),
und (56) Drehen der Klinge (14) der Küchenmaschine (10) zum Lufttrocknen.

2. Verfahren (50) nach Anspruch 1, **dadurch gekennzeichnet, dass** in Schritt (56), wenn eine Drehdauer $t_2$ erreicht wird, eine Temperatur $T_2$ der Heizvorrichtung (12) abgelesen wird, wobei $t_2 < t_3$, und $t_3$ einem empirischen Zeitwert für das Lufttrocknen entsprechend eingestellt wird, und das Verfahren folgende Schritte umfasst:

(58) Weiterdrehen der Klinge (14), wenn $T_a - T_2 < T_b$, und Beenden des Trocknens nach einer Dauer $t_3 - t_2$, wobei es sich bei $T_b$ um eine voreingestellte Temperaturdifferenz handelt und $T_b \geq T_m - T_a$, und
(60) Heizen der Heizvorrichtung (12), wenn $T_a - T_2 \geq T_b$, und nach einer Heizdauer $t_4$ Drehen der Klinge (14) zum Lufttrocknen, wobei $t_4$ den voreingestellten Temperaturen $T_a$ und $T_2$ entsprechend berechnet wird.

3. Verfahren (50) nach Anspruch 2, **dadurch gekennzeichnet, dass** der Schritt (60) Folgendes umfasst:

(62) Beenden der Trockendauer nach einer Lufttrockendauer $t_3 - t_2$, wenn $t_3 - t_2 \geq t_a$, wobei es sich bei $t_a$ um eine voreingestellte Zeitdifferenz handelt, und
(64) Beenden des Trocknens nach einer Lufttrockendauer $t_a$, wenn $t_3 - t_2 < t_a$.

4. Verfahren (50) nach Anspruch 3, **dadurch gekennzeichnet, dass** die voreingestellte Zeitdifferenz $t_a$ 10 bis 20 Sekunden beträgt.

5. Verfahren (50) nach Anspruch 2, **dadurch gekennzeichnet, dass** $t_3$ 50 bis 180 Sekunden beträgt.

6. Verfahren (50) nach Anspruch 2, **dadurch gekennzeichnet, dass** $T_b \geq 10$°C.

7. Verfahren (50) nach Anspruch 2, **dadurch gekennzeichnet, dass** die Heizdauer $t_4$ entsprechend der folgenden Formel berechnet wird:

$$t_4 = \frac{C \cdot m \cdot (T_a - T_2)}{U \cdot I},$$

wobei C eine spezifische Wärmekapazität der Heizvorrichtung, m eine Masse der Heizvorrichtung, U eine Heizspannung und I ein Heizstrom ist.

8. Verfahren (50) nach Anspruch 1, **dadurch gekenn-**

**zeichnet, dass** die Heizdauer $t_1$ entsprechend der folgenden Formel berechnet wird:

$$t_1 = \frac{C \cdot m \cdot (T_a - T_1)}{U \cdot I},$$

wobei C eine spezifische Wärmekapazität der Heizvorrichtung, m eine Masse der Heizvorrichtung, U eine Heizspannung und I ein Heizstrom ist.

9. Verfahren (50) nach Anspruch 1, **dadurch gekennzeichnet, dass** $T_m$-$T_a$ im Bereich von 5°C bis 10°C liegt.

10. Verfahren (50) nach Anspruch 1, **dadurch gekennzeichnet, dass** es das Öffnen einer Zuführöffnung (18) der Küchenmaschine (10) umfasst.

11. Küchenmaschine (10), die eine Heizvorrichtung (12), eine Klinge (14), einen Temperatursensor (16) und eine Steuerplatine (20) umfasst, wobei die Steuerplatine (20) eine ausführbare Computeranweisung speichert, **dadurch gekennzeichnet, dass** das Verfahren nach einem der Ansprüche 1 bis 10 durchgeführt wird, wenn die Steuerplatine (20) die Computeranweisung ausführt.

12. Speichermedium (22), das eine Computeranweisung speichert, **dadurch gekennzeichnet, dass** das Verfahren nach einem der Ansprüche 1 bis 10 durchgeführt wird, wenn die Computeranweisung auf der Küchenmaschine nach Anspruch 11 ausgeführt wird.

**Revendications**

1. Procédé (50) de séchage d'un robot culinaire (10), le robot culinaire (10) comprenant un dispositif chauffant (12) et une lame (14), **caractérisé en ce que** le procédé comprend les étapes suivantes :

   (52) lecture d'une température $T_1$ du dispositif chauffant (12) du robot culinaire (10), (54) chauffage du dispositif chauffant (12) pendant un temps de chauffage $t_1$, le temps de chauffage $t_1$ étant calculé selon la température $T_1$ et une température prédéfinie $T_a$, et la température prédéfinie $T_a$ étant inférieure à une température de protection de surchauffe $T_m$ du dispositif chauffant (12), et
   (56) rotation de la lame (14) du robot culinaire (10) pour un séchage à l'air.

2. Procédé (50) selon la revendication 1, **caractérisé en ce que**, dans l'étape (56), lorsqu'un temps de rotation $t_2$ est atteint, une température $T_2$ du dispositif chauffant (12) est relevée, $t_2 < t_3$, et $t_3$ est déter-

miné selon une valeur de temps empirique pour le séchage à l'air, et le procédé comprend les étapes suivantes :

   (58) lorsque $T_a$ - $T_2$ < $T_b$, poursuite de la rotation de la lame (14), et fin du séchage après un temps $t_3$ - $t_2$, $T_b$ étant une différence de température prédéfinie et $T_b \geq T_m$ - $T_a$, et
   (60) lorsque $T_a$ - $T_2 \geq T_b$, chauffage du dispositif chauffant (12), et après un temps de chauffage $t_4$, rotation de la lame (14) pour un séchage à l'air, $t_4$ étant calculé selon les températures prédéfinies $T_a$ et $T_2$.

3. Procédé (50) selon la revendication 2, **caractérisé en ce que** l'étape (60) comprend :

   (62) lorsque $t_3$ - $t_2 \geq t_a$, $t_a$ étant une différence de temps prédéfinie, fin du temps de séchage après un temps de séchage à l'air $t_3$ - $t_2$, et
   (64) lorsque $t_3$ - $t_2 < t_a$, fin du séchage après un temps de séchage à l'air $t_a$.

4. Procédé (50) selon la revendication 3, **caractérisé en ce que** la différence de temps prédéfinie $t_a$ est entre 10 secondes et 20 secondes.

5. Procédé (50) selon la revendication 2, **caractérisé en ce que** $t_3$ est entre 50 secondes et 180 secondes.

6. Procédé (50) selon la revendication 2, **caractérisé en ce que** $T_b \geq 10$ °C.

7. Procédé (50) selon la revendication 2, **caractérisé en ce que** le temps de chauffage $t_4$ est calculé selon la formule suivante :

$$t_4 = \frac{C \cdot m \cdot (T_a - T_2)}{U \cdot I}$$

où C est la capacité thermique spécifique du dispositif chauffant, m est une masse du dispositif chauffant, U est une tension de chauffage et I est un courant de chauffage.

8. Procédé (50) selon la revendication 1, **caractérisé en ce que** le temps de chauffage $t_1$ est calculé selon la formule suivante :

$$t_1 = \frac{C \cdot m \cdot (T_a - T_1)}{U \cdot I}$$

où C est la capacité thermique spécifique du dispositif chauffant, m est une masse du dispositif chauffant, U est une tension de chauffage et I est un courant de chauffage.

9. Procédé (50) selon la revendication 1, **caractérisé en ce que** $T_m$ - $T_a$ est entre 5 °C et 10 °C.

10. Procédé (50) selon la revendication 1, **caractérisé en ce qu'**il comprend :
l'ouverture d'un port d'alimentation (18) du robot culinaire (10).

11. Robot culinaire (10) comprenant un dispositif chauffant (12), une lame (14), un capteur de température (16) et une carte de commande (20), la carte de commande (20) stockant une instruction informatique exécutable,
**caractérisé en ce que** le procédé selon l'une quelconque des revendications 1 à 10 est exécuté lorsque la carte de commande (20) exécute l'instruction informatique.

12. Support de stockage (22), le support de stockage stockant une instruction informatique,
**caractérisé en ce que** le procédé selon l'une quelconque des revendications 1 à 10 est exécuté lorsque l'instruction informatique est exécutée sur le robot culinaire selon la revendication 11.

FIG. 1

50

52 — Read a temperature $T_1$ of the heater 12 of the food processor 10

54 — Heat the heater 12 for a heating time $t_1$

56 — Rotate the blade 14 of the food processor 10 for air drying, and when a rotation time $t_2$ is reached, read a temperature $T_2$ of the heater 12

$T_a - T_2 \gtrsim T_b$      $T_a - T_2 < T_b$

60 — Heat the heater 12 for a heating time $t_4$

Continue to rotate the blade 14 for a time $t_3 - t_2$ — 58

$t_3 - t_2 \gtrsim t_a$      $t_3 - t_2 < t_a$

62 — Rotate the blade 14 for air drying, for a time $t_3 - t_2$

Rotate the blade 14 for air drying, for a time $t_a$ — 64

End the drying

FIG. 2

**FIG. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   WO 2019123472 A1